# EUROPÄISCHE PATENTSCHRIFT

(11) **EP 1 439 929 B1**
(45) Veröffentlichungstag und Bekanntmachung des Hinweises auf die Patenterteilung: **12.04.2006**
(21) Anmeldenummer: 02804856.9
(22) Anmeldetag: 21.08.2002
(51) Int. Cl.: B23B 27/04

(54) **WERKZEUGHALTER FÜR SCHNEIDKÖRPER**
TOOL HOLDER FOR CUTTING BODIES
PORTE-OUTIL POUR CORPS TRANCHANT

(30) Priorität: 31.10.2001 DE 10153646
(43) Veröffentlichungstag der Anmeldung: 28.07.2004
(73) Patentinhaber: HARTMETALL-WERKZEUGFABRIK PAUL HORN GMBH, 72072 Tübingen (DE)
(72) Erfinder: OETTLE, Matthias, 72585 Riederich (DE)
(74) Vertreter: Bartels, Martin Erich Arthur
(86) Internationale Anmeldenummer: PCT/EP2002/009327
(87) Internationale Veröffentlichungsnummer: WO 2003/051563

(56) Entgegenhaltungen:
- US-A- 3 844 008
- US-A- 5 112 164
- US-A- 5 688 080
- US-B1- 6 186 704

## Beschreibung

Die Erfindung bezieht sich auf einen Werkzeughalter für Schneidkörper mit den Merkmalen des Oberbegriffes des Patentanspruches 1. Durch die DE 40 24 096 C2 ist ein Werkzeughalter mit einem Schneidwerkzeug für die spanabhebende Metallbearbeitung, insbesondere Mini-Bohrstange, bekannt, mit einem in einer Ausnehmung mit Schneideinsatzauflageflächen eines in Längsrichtung gabelartig geschlitzten Halterschaftes mittels eines aufliegenden Klernm-Schenkels an einer ebenen Spannfläche verspannten Schneideinsatz. Bei der bekannten Lösung liegt die Spannfläche des Schneideinsatzes parallel zur Achse des Halterschaftes, wobei im Halterschaft die Ausnehmung drei Schneideinsatz-Auflageflächen, nämlich eine Bodenfläche, eine Hauptschnittdruckabstützfläche und eine Rückdruckabstützfläche, aufweist, welche sowohl untereinandet als auch mit einer Seitenfläche und einer Stimfläche als einzige offene Seitenflächen Winkel kleiner 90° einschließen.

Bei der Benutzung derartiger Werkzeughalter für die spanabhebende Bearbeitung von Werkstücken ist es im Hinblick auf die beim Bearbeitungsvorgang zu erzielende Genauigkeit und insbesondere auch die Güte der bearbeiteten Oberflächen äußerst wichtig, dass der Werkzeughalter mit seiner Anlagefläche absolut fest und sicher mittels der Festlegeeinrichtung am Grundhalter fixierbar ist. Mit anderen Worten gesagt muß sichergestellt sein, dass aus der Schneidkraft des Schneidkörpers resultierende Kraftkomponenten; die zwischen Werkzeughalter und Grundhalter als Schubkräfte oder als Drehmomente wirken, die den Werkzeughalter am Grundhalter zu verdrehen suchen, sicher, d.h. ohne Beeinträchtigung des Festsitzes, über die Anlagefläche in den Grundhalter eingeleitet werden.

Durch die DE 195 17 365 A1 ist ein Werkzeughalter für Drehbearbeitungen bekannt, umfassend eine als Werkzeughalter dienende Grundaufnahme, die mit ihrer Werkzeugachse senkrecht zur Drehachse ausgerichtet an einem Werkzeugträger als Grundhalter montierbar ist, einen an der Grundaufnahme auswechselbar gehaltenen Schneidenhalter und eine am Schneidenhalter auswechselbar gehaltene Schneidpiatte. Die Grundaufnahme selbst weist eine quer zur Werkzeugachse verlaufende Auflagefläche als Anlageteil auf, wobei der Schneidenhalter eine Aufsetzfläche aufweist und mit dieser auf der Anlagefläche aufliegend auf der Grundaufnahme auswechselbar montierbar ist. Dabei ist der Schneidenhalter gegen alle Relativbewegungen der Aufsetzftäche gegenüber der Auflagefläche durch Passungselemente fixiert, wobei der Schneidenhaler mindestens eine Schneidplättenaufnahme aufweist.

Da bei der bekannten Lösung das Anlageteil nicht flächig ausgebildet ist, sondern vielmehr aus einer Verzahnungsgeometrie gebildet ist und die stimseitig gegenüberliegenden Eingriffszähne von Werkzeughalter und Grundhalter ineinandergreifen, kommt es trotz der genannten Passungselemente, insbesondere in Form von Paßschrauben, zu Verkantungsvorgängen, was sich nachteilig auf die Bearbeitungsgenauigkeit mit den im Werkzeughalter aufgenommenen Wendeschneidplatten führt, da diese gleichfalls in ihrer Bearbeitungsebene verkantet und mithin versetzt werden. Auch ist die bekannte Lösung aufgrund der herzustellenden Verzahnungsgeometrien aufwendig und teuer in der Herstellung, insbesondere wenn die dahingehende Verzahnung hochgenau auszuführen ist.

Durch die US-A-5 688 080 ist ein gattungsgemäßer Werkzeughalter für Schneidkörper, insbesondere Wendeschneidplatten, bekannt, der mittels einer Festlegeeinrichtung mit drei Befestigungsschrauben an einem Grundhalter anbringbar ist, und einem mit diesem zusammenwirkenden Anlageteil, das sich in flächiger Ausbildung in Richtung des Werkzeughalters erstreckt, wobei über das Anlageteil die vom Schneidkörper erzeugten Schneidkräfte in den Grundhalter einleitbar sind, wobei das flächig ausgebildete Anlageteil mittels einer eingearbeiteten Vertiefung in Flächenteile unterteilt ist, zwischen denen die Vertiefung einen Sitz zur Aufnahme eines vorspringenden Paßkörpers des Grundhalters bildet, und wobei die Wände der Vertiefung für den Paßkörper Abstützflächen -bilden, die zueinander jeweils unterschiedliche Ebenen definieren, die flächig ausgebildet quer zu dem Antageteil sich erstrecken, um dergestalt in den Paßkörper des Grundhalters sowohl die aus der Schneidkraft resultierenden Schub- als auch Torsionskräfte einzuleiten. Bei der bekannten Lösung ist die Vertiefung bis auf einen randseitigen Öffnungsbereich im Werkzeughälter von drei Wänden allseits begrenzt, die Ebenen definieren, die zur Ebene der Flächenteile jeweils senkrecht verlaufen, so dass es insbesondere bezogen auf diese Flächenteile beim Festlegen des Werkzeughalters am Grundhalter zu Überbestimmungen kommt, die ausgeglichen werden über einen Keil, der mittels einer Doppelschraube innerhalb einer Ausnehmung im Paßkörper längsverfahrbar einstellbar ist und dergestalt den Spielausgleich vornimmt zwischen Werkzeug- und Grundhalter. Wird ein dahingehendes Anlagespiel bei der bekannten Lösung über den Keil ausgeglichen, führt dies aber zu Lageveränderungen im aktiven Schneidbereich des Schneidkörpers mit der Folge, dass eine hochgenaue Bearbeitung mit der bekannten Lösung nicht durchführbar ist und im Hinblick auf die Teilevielfalt ist die bekannte Lösung teuer in der Herstellung.

Ausgehend von diesem Stand der Technik und dem gattungsgemäßen Werkzeughalter für Schneidkörper stellt sich die Erfindung die Aufgabe, die bekannten Lösungen derart weiter zu verbessern, dass der Anlageteil derart gestaltet ist, dass eine besonders sichere Festlegung am Grundhalter gewährleistet ist, dass eine hochgenaue Bearbeitung durchführbar ist und dass dennoch der Werkzeughalter kostengünstig zu erstellen ist.

Bei einem Werkzeughalter der genannten Art ist diese Aufgabe erfindungsgemäß dadurch gelöst, dass die Vertiefung in der Art eines Kanals ausgebildet ist, dass vier Wände die Vertiefung begrenzen und Ebenen definieren, die zur Ebene der Flächenteile jeweils senkrecht verlaufen und dass die beiden durch die Vertiefung voneinander getrennten Flächenteile in einer gemeinsamen oder in verschiedenen, parallel zueinander angeordneten Ebenen verlaufen. Hierdurch ergibt sich eine formschlüssige Lagefixierung gegenüber jeglicher Bewegung längs der drei Achsen des räumlichen Koordinatensystems. Diese formshläsige fixierung in der unterschiedlichen Ebenen, die vorzugsweise zueinander je senkrecht verlaufen, ergibt sich, ohne dass hinterschnittene Flächen an dem Anlageteil des Werkzeughalters oder am Paßkörper des Grundhalters vorgesehen werden müßten, so dass das Anbringen des Werkzeughalters am Grundhalter durch einfaches Einstecken des Paßkörpers in die Vertiefung im Verlauf einer geradlinigen Einsatzbewegung erfolgen kann, so dass sich die Benutzung des Werkzeughalters einfach und bequem gestaltet. Ferner läßt sich die dahingehende Ausgestaltung unter Einsatz ebener Anlage- und Paßflächen kostengünstig realisieren. In Verbindung mit der durch die Flächenteile gebildeten Berührungsebene mit der Aufnahme des Grundhalters, welche Berührungsebene zu den Berührungsebenen an den Abstützflächen gebildet durch die Vertiefung wiederum senkrecht ist, ergibt sich für den Werkzeughalter somit eine formschlüssige und spielfreie Sicherung gegen Translations- und Rotationsbewegungen bezüglich sämtlicher drei räumlichen Koordinatenachsen. Auf zusätzliche Ausgleichsmittel zum Beseitigen des Spiels, wie der längseinstellbare Keil nach der US-A-5 688 080, kann insoweit bei der erfindungsgemäßen Lösung verzichtet werden.

Wenn der Werkzeughalter für die Verwendung mit einem einen balkenartigen Träger bildenden Grundhalter vorgesehen ist, ist der Werkzeughalter an letzterem vorzugsweise so festlegbar, dass sich die Ebene des Anlageteils parallel zur Hauptlängsachse des Grundhalters erstreckt. Bei dieser Anordnung verhindert der Formschluß zwischen Grundhalter und Anlageteil eine Verdrehung um die Längsachse des Grundhalters. In Zusammenwirkung mit den an den Wänden der Vertiefung ausgebildeten Abstützflächen sind die weiteren möglichen Bewegungen innerhalb des räumlichen Koordinatensystems durch Formschluß unterbunden.

Vorzugsweise ist der Werkzeughalter als Klemmhaiter ausgebildet, der eine mit einem Grundkörper einstückige Klemmbacke aufweist, die zur Bildung eines Klemmspaltes auskragend am Grundkörper angeordnet ist, wobei für das Festklemmen des Schneidkörpers die lichte Weite des Klemmspaltes mittels einer diesen durchgreifenden Klemmschraube veränderbar ist.

Als Festlegeeinrichtung zum Anbringen des Werkzeughalters am Grundhalter sind vorzugsweise Spannschrauben vorgesehen, die sich in zur Ebene der Anlagefläche senkrechter Richtung durch den Werkzeughalter hindurch erstrecken.

Nachstehend ist die Erfindung anhand eines in der Zeichnung dargestellten Ausführungsbeispieles im einzelnen erläutert. Es zeigen:
Fig. 1 eine perspektivische Ansicht des zu beschreibenden Ausführungsbeispieles des Werkzeughalters mit Blickrichtung auf sein Anlageteil zur Anbringung an einem Grundhalter;
Fig. 2 eine abgebrochene perspektivische Ansicht des vorderen, zur Aufnahme des Werkzeughalters von Fig. 1 bestimmten Teiles eines Grundhalters;
Fig. 3 eine perspektivische, teils abgebrochen gezeigte Ansicht des am Grundhalter angebrachten Werkzeughalters und
Fig. 4 eine Draufsicht des Ausführungsbeispieles des Werkzeughalters.

Der erfindungsgemäße Werkzeughalter ist nachstehend anhand eines Ausführungsbeispieles beschrieben, bei dem es sich um einen sogenannten Klemmhalter handelt, der einen Grundkörper 1 aufweist, der in seinem vorderen Endbereich eine Aufnahmekassette 3 mit einem Sitz zur Aufnahme einer Wendeschneidplatte 5 handelsüblicher Art aufweist. Eine mit dem Grundkörper 1 einstückige Klemmbacke 7 ist am Grundkörper 1 in der Weise auskragend angeordnet, dass ein Klemmspalt 9 gebildet wird, dessen lichte Weite mittels einer den Klemmspalt 9 durchgreifenden Klemmschraube 11 verringert werden kann, um durch Anpressen der Klemmbacke 7 an die Wendeschneidplatte 5 diese in ihrem Sitz in der Aufnahmekassette 3 zu fixieren.

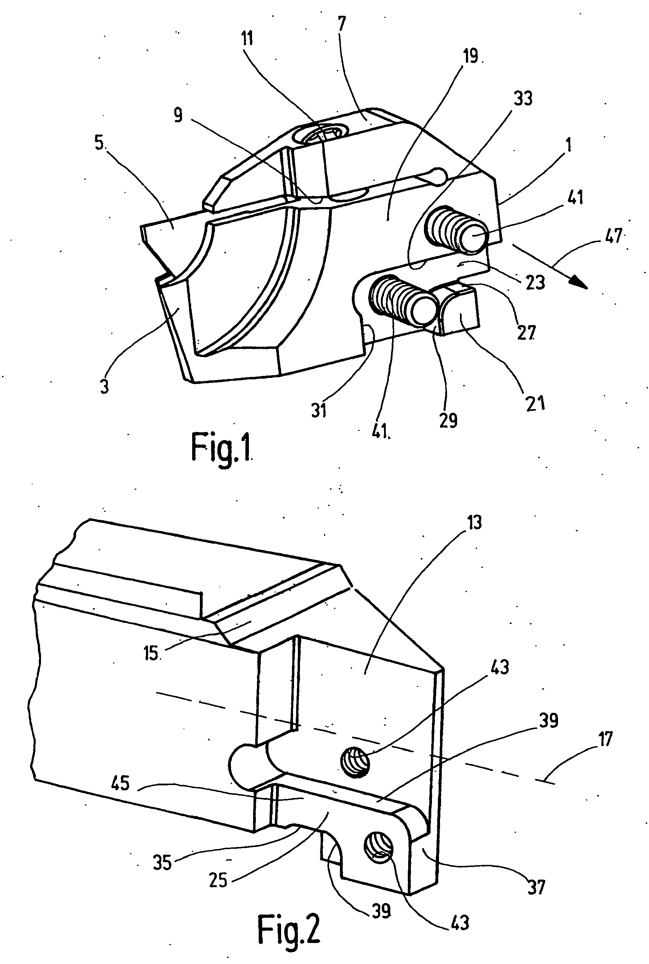

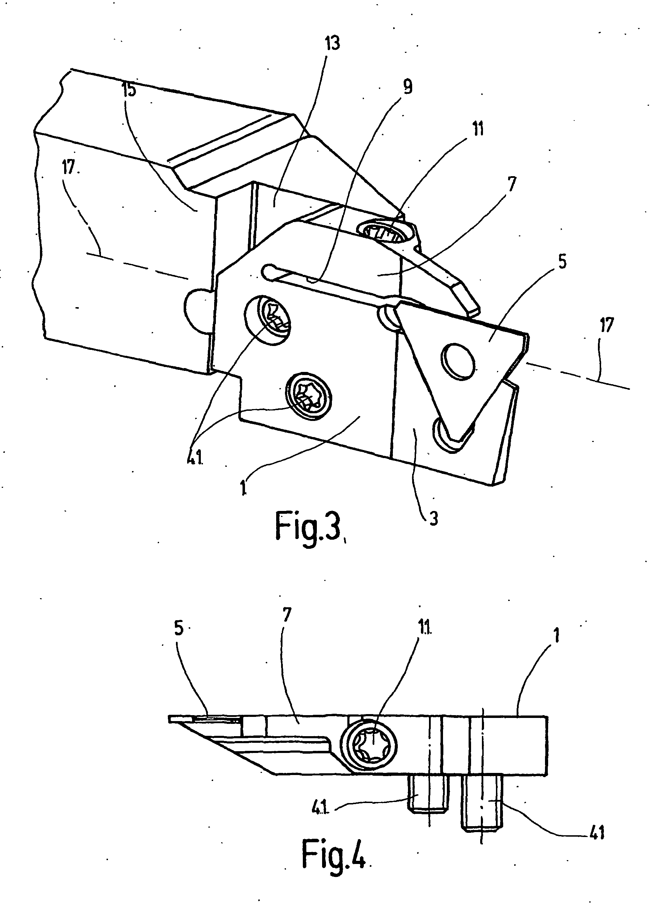

Wie aus den Figuren ersichtlich ist (vgl. insbesondere Fig. 3), ist der Grundkörper 1 mit seiner der Wendeschneidplatte 5 gegenüberliegenden Breitseite an einer Werkzeugaufnahme 13 eines Grundhalters 15 anbringbar, von dem in Fig. 2 und 3 lediglich der vordere Endbereich mit der Werkzeugaufnahme 13 gezeigt sind. In dem nicht dargestellten Teil hat der Grundhalter 15 die Form eines balkenartigen Trägers mit einer Haupt- oder Trägerlängsachse 17.

Für die Zusammenwirkung mit der Aufnahme 13 des Grundhalters 15 befindet sich an der zugeordneten Breitseite des Grundkörpers 1 des Werkzeughalters als Anlageteil eine ebene Anlagefläche, die, wie aus Fig. 1 deutlich ersichtlich ist, in zwei Flächenteile 19 und 21 unterteilt ist. Beide Flächenteile 19 und 21, die zusammen das Anlageteil bzw. die Anlagefläche bilden, liegen in einer gemeinsamen Ebene. Getrennt sind die Flächenteile 19 und 21 durch eine in die Anlagefläche eingearbeitete, kanalartige Vertiefung 23. An der am Grundhalter 15 befindlichen Aufnahme 13 (siehe Fig. 2) befindet sich ein Paßkörper 25 in Form eines Vorsprunges, dessen Form an diejenige der Vertiefung 23 im Grundkörper 1 des Werkzeughalters so angepaßt ist, dass der Paßkörper 25 in ihr aufnehmbar ist. Die Wände 27,29,31 und 33 der Vertiefung 23, angrenzend sowohl an den Flächenteil 19 als auch den Flächenteil 21 der Anlagefläche, verlaufen jeweils senkrecht zur Ebene der aus den Flächenteilen 19 und 21 bestehenden Anlagefläche. Diejenigen Wände der Vertiefung 23, die in Fig.1 mit 31 und 33 bezeichnet sind, bilden Abstützflächen für eine formschlüssige Verriegelung des Werkzeughalters, wenn dieser an der Aufnahme 13 des Grundhalters 15 so angebracht ist, dass der Paßkörper 25 in der Vertiefung 23 aufgenommen ist. Dabei bildet die Wand 31, die an den Flächenteil 19 angrenzt, eine Abstützfläche, die an dem in Fig. 2 mit 37 bezeichneten vorderen Teil des Paßkörpers 25 anliegt, während die Wand 33 als Abstützfläche in Zusammenwirkung mit der in Fig. 2 mit 39 bezeichneten Oberseite des Paßkörpers 25 dient.

An den Abstützflächen, welche durch die an den Flächenteil 19 der Anlagefläche angrenzenden Wände 31 und 33 der Vertiefung 23 gebildet sind, ergibt sich bei in der Vertiefung 23 sitzendem Paßkörper 25 eine formschlüssige Verriegelung mittels aneinander anliegender Flächen, die sich in mehreren, zueinander nicht parallelen Ebenen erstrecken. In Verbindung mit der durch die Flächenteile 19 und 21 gebildeten Berührungsebene mit der Aufnahme 13 des Grundhalters, welche Berührungsebene zu den Berührungsebenen an den Abstützflächen wiederum senkrecht ist, ergibt sich für den Werkzeughalter somit eine formschlüssige Sicherung gegen Translations- und Rotationsbewegungen bezüglich sämtlicher drei räumlichen Koordinatenachsen.

Zur Festlegung des Werkzeughalters am Grundhalter 15 sind beim gezeigten Ausführungsbeispiel zwei Spannschrauben 41 vorgesehen, die sich durch Durchgangsbohrungen im Grundkörper 1 des Werkzeughalters hindurch erstrecken und mit jeweils einer Bohrung 43 mit Innengewinde an der Aufnahme 13 des Grundhalters 15 verschraubbar sind. Wie aus den Figuren ersichtlich ist, erstreckt sich eine der Spannschrauben 41 durch den Flächenteil 19 der Anlagefläche des Werkzeughalters während die andere Spannschraube 41 sich innerhalb der Vertiefung 23 erstreckt, so dass diese Spannschraube 41 am Grundhalter 15 mit einer Gewindebohrung 43 zusammenwirkt, welche im Paßkörper 25 ausgebildet ist.

Da die Wände 27, 29, 31 und 33 der Vertiefung senkrecht zur Ebene der aus den Flächenteilen 19 und 21 bestehenden Anlagefläche verlaufen, die Wände der Vertiefung 23 also keinen Hinterschnitt aufweisen, läßt sich der Paßkörper 25 mit gradliniger Bewegungsrichtung in die Vertiefung 23 einfahren, wenn der Werkzeughalter am Grundhalter 15 angebracht wird.

Beim gezeigten Beispiel hat die Vertiefung 23 eine in etwa kanalartige Form, so dass sich für den Paßkörper 25 ein in Fig. 2 mit 45 bezeichneter Abschnitt ergibt, der sich parallel zur Längsachse 17 des Grundhalters 15 erstreckt. Damit beim Anbringen des Werkzeughalters an der Aufnahme 13 durch das Festziehen der Spannschrauben 41 eine Kraftkomponente erzeugt wird, die in Richtung des Pfeiles 47 von Fig. 1 wirkt und dadurch den längsverlaufenden Abschnitt 45 des Paßkörpers 25 längs der Wand 33 der Vertiefung 23 zu verschieben sucht, um die Abstützfläche an der Wand 31 spielfrei an den Teil 37 des Paßkörpers 25 anzulegen, können die Durchgangslöcher, durch die sich die Schrauben 41 im Grundkörper 1 hindurch erstrecken, einen minimalen Versatz relativ zu den Gewindebohrungen 43 am Grundhalter 15 haben, so dass sich beim Festziehen der Schrauben 41 diese Kraftkomponente ergibt, die am Werkzeughalter in einer Richtung wirksam ist, die in Fig. 1 mit einem Pfeil 47 angegeben ist. Die in dieser Richtung wirkende Kraftkomponente legt auch die an der Wand 33 des Flächenteils 19 gebildete Abstützfläche spielfrei an die Oberseite 39 (Fig.2) des Paßkörpers 25 an.

Anstelle der in einer Ebene verlaufenden Anlagefläche als Anlageteil kann die Anlagefläche gestuft ausgebildet sein, d.h. die Flächenteile 19 und 21 verlaufen in verschiedenen, parallel zueinander angeordneten Ebenen.

## Patentansprüche

1. Werkzeughalter für Schneidkörper, insbesondere Wendeschneidplatten (5), der mittels einer Festiegeeinrichtung (41) an einem Grundhalter (15) anbringbar ist, und einem mit diesem zusammenwirkenden Anlageteil, das sich in flächiger Ausbildung in Richtung des Werkzeughalters erstreckt, wobei über das Anlageteil die vom Schneidkörper erzeugten Schneidkräfte in den Grundhalter (15) einleitbar sind, wobei das flächig ausgebildete Anlageteil mittels einer eingearbeiteten Vertiefung (23) in Flächenteile (19 und 21) unterteilt ist, zwischen denen die Vertiefung (23) einen Sitz zur Aufnahme eines vorspringenden Paßkörpers (25) des Grundhalters (15) bildet, und wobei die Wände der Vertiefung (23) für den Paßtcörper (25) Abstützflächen (31 und 33) bilden, die zueinander jeweils unterschiedliche Ebenen definieren, die flächig ausgebildet quer zu dem Anlageteil sich erstrecken, um dergestalt in den Paßkörper (25) des Grundhalters (15) sowohl die aus der Schneidkraft resultierenden Schub- als auch Torsionskräfte einzuteiten, **dadurch gekennzeichnet, dass** die Vertiefung (23) in der Art eines Kanals ausgebildet ist, dass jeweils zwei der Wände eine Seite des Kanals bilden und sich in nicht parallelen Ebenen erstrecken, die zur Ebene der Flächenteile (19,21) jeweils senkrecht verlaufen und dass die beiden durch die Vertiefung (23) voneinander getrennten Flächentelte (19,21) in einer gemeinsamen oder in verschiedenen, parallel zueinander angeordneten Ebenen verlaufen.

2. Werkzeughalter nach Anspruch 1, **dadurch gekennzeichnet, dass** er für die Verwendung mit einem einen balkenartigen Träger bildenden Grundhalter (15) vorgesehen und an diesem so festlegbar ist, dass sich die Ebene dei Flächenteile (19,21) parallel zur Hauptlängsachse (17) des Grundhalters (15) erstreckt.

3. Werkzeughalter nach Anspruch 1 oder 2, **dadurch gekennzeichnet, dass** zumindest eine erste Abstützfläche (31) eine Ebene bildet, die zu der durch den Grundhalter (15) definierten Hauptlängsachse (17) normal gerichtet ist und zur Übertragung von aus der Schneidkraft resultierenden, in der Längsrichtung wirkenden Schubkräften auf den Paßkörper (25) des Grundhalters (15) dient.

4. Werkzeughalter nach Anspruch 3, **dadurch gekennzeichnet, dass** eine weitere Abstützfläche (33), die durch eine an den gleichen Flächenteil (19) der Anlagefläche (19 und 21) angrenzende Wand der Vertiefung (23) gebildet ist, eine zur ersten Abstützfläche (31) senkrechte Ebene bildet und zur Übertragung von aus der Schneidkraft resultierenden Torsionskräften auf den Paßkörper (25) des Grundhalters (15) dient.

5. Werkzeughalter nach einem der Ansprüche 1 bis 4, **dadurch gekennzeichnet, dass** er als Klemmhalter ausgebildet ist und eine mit einem Grundkörper (1) einstückige Klemmbacke (7) aufweist, die zur Bildung eines Klemmspaltes (9) auskragend am Grundkörper.(1) angeordnet ist, und dass für das Festklemmen des Schneidkörpers (5) die lichte Weite des Klemmspaltes (9) mittels einer diesen durchgreifenden Klemmschraube (11) verringerbar ist.

6. Werkzeughalter nach einem der Ansprüche 1 bis 5, **dadurch gekennzeichnet, dass** die Festlegeeinrichtung zum Anbringen des Werkzeughalters am Grundhalter (15) Spannschrauben (41) aufweist, die sich in zur Ebene der Flächenteile (19,21) senkrechter Richtung durch den Werkzeughalter hindurch erstrecken.

7. Werkzeughalter nach Anspruch 6, **dadurch gekennzeichnet, dass** sich zumindest eine Spannschraube (41) durch einen Flächenteil (19) des Anlageteils (19,21) hindurch und zumindest eine Spannschraube (41) sich zwischen den Flächenteilen (19,21) des Anlageteils durch die diese trennende Vertiefung (23) hindurch erstreckt.

## Claims

1. Tool holder for cutters, especially turning cutter plates (5), which can be affixed to a base holder (15) with a fixing means (41), and an abutment part cooperating with the same, the same extending in a planar fashion in the direction of the tool holder, whereby the cutting forces created by the cutter can be transmitted into the base holder (15) via the abutment part, whereby the planar abutment part is subdivided into area sections (19 and 21) by means of an integral recess (23), between which the recess (23) forms a seat for receiving a projecting body (25) of the base holder (15), and whereby the walls of the recess (23) form supporting surfaces (31 and 33) for the body (25), which together define different levels of a planar type, which extend traverse to the abutment part in order to transmit the forward as well as the torsion forces resulting from the cutting force into the body (25) of the base holder (15) in this way, **characterised in that** the recess (23) takes the form of a kind of channel, **in that** two of the walls each form one side of the channel, and **in that** the same extend on different parallel levels which each extend vertical to the level of the area sections (19, 21), and **in that** the two area sections (19, 21) that are separated from each other by the recess (23) extend along a common or along different parallel levels.

2. Tool holder according to Claim 1, **characterised in that** the same is envisaged for use with a base holder (15) forming a beam-like support and can be affixed to the same in such a way that the level of the area sections (19, 21) extends parallel with the main longitudinal axis (17) of the base holder (15).

3. Tool holder according to Claim 1 or 2, **characterised in that** at least one first supporting surface (31) forms a level which faces the main longitudinal axis (17) defined by the base holder (15) normally, and serves to transmit forward forces resulting from the cutting force and acting in a longitudinal direction to the body (25) of the base holder (15).

4. Tool holder according to Claim 3, **characterised in that** a further supporting surface (33) which is formed by a wall of the recess (23) adjoining the same area section (19) of the abutment surface (19 and 21) forms a level that extends vertical to the first supporting surface (31) and serves to transmit torsion forces resulting from the cutting force to the body (25) of the base holder (15).

5. Tool holder according to one of the Claims 1 to 4, **characterised in that** the same takes the form of a clamp holder and incorporates a clamping cheek (7) forming one piece together with the base body (1), the same being positioned in a collar-like fashion to form a clamping gap (9) on the base body (1), and **in that** the clear width of the clamping gap (9) can be reduced with a clamping screw (11) penetrating the same for the clamping of the cutter (5).

6. Tool holder according to one of the Claims 1 to 5, **characterised in that** the fixing means for affixing the tool holder to the base body (15) incorporates tensioning screws (41) which extend in a vertical direction to the level of the area sections (19, 21) in a direction through the tool holder.

7. Tool holder according to Claim 6, **characterised in that** at least one tensioning screw (41) extends through an area section (19) of the abutment part (19, 21), and **in that** at least one tensioning screw (41) extends between the area sections (19, 21) of the abutment part through the recess (23) separating the same.

## Revendications

1. Porte-outil pour corps tranchant, en particulier plaquettes de coupe amovibles (5), qui peut être placé sur un appui de base (15) au moyen d'un dispositif de fixation (41), et un élément de contact qui agit conjointement avec ce dernier et s'étend dans une réalisation plane en direction du porte-outils, les forces de coupe produites par le corps tranchant pouvant être appliquées à l'appui de base (15) par l'intermédiaire de l'élément de contact, l'élément de contact ayant de la surface étant divisé au moyen d'un évidement (23) usiné en parties de surface (19 et 21) entre lesquelles l'évidement (23) forme un siège destiné à recevoir un corps d'ajustage (25) en saillie de l'appui de base (15) et les parois de l'évidement (23) formant pour le corps d'ajustage (25) des surfaces d'appui (31 et 33) qui définissent chacune l'une par rapport à l'autre des plans différents qui s'étendent perpendiculairement à l'élément de contact ayant de la surface, afin d'appliquer aussi au corps d'ajustage (25) de l'appui de base (15) les forces non seulement de cisaillement mais également de torsion provenant de la force de coupe, **caractérisé en ce que** l'évidement (23) est réalisé comme un canal, **en ce que** deux des parois forment respectivement un côté du canal et s'étendent dans des plans non parallèles qui sont respectivement perpendiculaires au plan des parties de surface (19, 21) et **en ce que** les deux parties de surface (19, 21) séparées l'une de l'autre par l'évidement se trouvent dans un plan commun ou dans des plans différents disposés parallèlement l'un par rapport à l'autre.

2. Porte-outil selon la revendication 1, **caractérisé en ce qu'**il est prévu pour l'utilisation avec un appui de base (15) formant un support ressemblant à une poutre et peut être fixé à ce dernier de telle manière que le plan des parties de surface (19, 21) s'étende parallèlement à l'axe longitudinal principal (17) de l'appui de base (15).

3. Porte-outil selon la revendication 1 ou 2, **caractérisé en ce qu'**au moins une première surface de soutien (31) forme un plan qui soit orienté normalement par rapport à l'axe longitudinal principal (17) défini par l'appui de base (15) et sert à appliquer des forces de cisaillement résultant de la force de coupe et agissant dans le sens longitudinal sur le corps d'ajustage (25) de l'appui de base (15).

4. Porte-outil selon la revendication 3, **caractérisé en ce qu'**une autre surface de soutien (33) qui est formée par une paroi de l'évidement (23) adjacente à la même partie de surface (19) de la surface de contact (19 et 21) forme un plan perpendiculaire à la première surface de soutien (31) et sert à appliquer des forces de torsion provenant de la force de coupe au corps d'ajustage (25) de l'appui de base (15).

5. Porte-outil selon une des revendications 1 à 4, **caractérisé en ce qu'**il est réalisé sous forme de porte-plaquette et comporte une mâchoire de serrage (7) d'un seul tenant avec un corps de base (1), qui est disposée en saillie sur le corps de base (1) pour former un interstice de serrage (9) et **en ce que** pour serrer le corps tranchant (5) l'écartement de l'interstice de serrage (9) peut être réduit au moyen d'une vis de blocage (11) qui le traverse.

6. Porte-outil selon une des revendications 1 à 5, **caractérisé en ce que** le dispositif de fixation pour la mise en place du porte-outil sur l'appui de base (15) comporte des vis de serrage (41) qui traversent le porte-outil dans un sens perpendiculaire par rapport au plan des parties de surface (19, 21).

7. Porte-outil selon la revendication 6, **caractérisé en ce qu'**au moins une vis de serrage (41) traverse une partie de surface (19) de la partie de contact (19, 21) et **en ce qu'**au moins une vis de serrage (41) traverse les parties de surface (19, 21) de la partie de contact à travers l'évidement (23) qui les sépare.
